# EUROPÄISCHE PATENTSCHRIFT

(11) **EP 1 504 296 B1**
(45) Veröffentlichungstag und Bekanntmachung des Hinweises auf die Patenterteilung: **05.10.2011**
(21) Anmeldenummer: 03701431.3
(22) Anmeldetag: 18.02.2003
(51) Int. Cl.: G02B 6/38

(54) **OPTISCHER STECKVERBINDER**
OPTICAL CONNECTOR
CONNECTEUR OPTIQUE

(30) Priorität: 14.05.2002 CH 8042002
(43) Veröffentlichungstag der Anmeldung: 09.02.2005
(73) Patentinhaber: HUBER+SUHNER AG, 9100 Herisau (CH)
(72) Erfinder: ZAINA, Patrick, CH-9500 Wil (CH); FRISCHKNECHT, Urs, CH-9100 Herisau (CH)
(74) Vertreter: Groner, Manfred
(86) Internationale Anmeldenummer: PCT/CH2003/000119
(87) Internationale Veröffentlichungsnummer: WO 2003/096092

(56) Entgegenhaltungen:
- EP-A- 1 072 920
- US-A- 6 142 676

## Beschreibung

### TECHNISCHES GEBIET

Die vorliegende Erfindung bezieht sich auf das Gebiet optischen Steckverbindungen. Sie betrifft einen optischen Steckverbinder gemäss dem Oberbegriff des Anspruchs 1.

Ein solcher optischer Steckverbinder ist z.B. aus der Druckschrift EP-A-1 072 920 bekannt. Dieser besitzt eine Schraubenfeder, welche den Deckel in die Schliessposition vorspannt. An einem Ende sitzt diese Feder auf einem Federdorn eines Gebäudeteils. Mit dem anderen Ende umgibt die Feder einen Stössel, welcher den Deckel beaufschlagt. Eine Stösselstimseite berührt in jeder Position des Deckels einen Hebelarm des Deckels, der über die Ebene eines Gelenknockens hinausragt.

Die US-A-5,940,560 offenbart eine optische Verbindung mit zwei zusammensteckbaren Teilen, die jeweils eine Schutzkappe besitzen, die an einem Ende fest an einem Gehäuse befestigt sind und mit einem Ende Öffnungen verschliessen, in die jeweils eine optische Faser einschiebbar ist. Die Schutzklappen besitzen jeweils zwei angeformte federnde Arme. Beim Zusammenstecken der beiden Teile, werden die freien Enden gegen die rückwirkende Kraft der federnden Arme von den Öffnungen weg verschwenkt. Die US-A-6,041,155 offenbart einen Adapter, der einen wegklapparen Schutzdeckel besitzt. An diesem Deckel ist ein federnder Arm angeformt, der an einem Steuerteil eines Gehäuses anliegt. Der Steuerteil ist so ausgebildet, dass der Deckel in einer Verschlussposition und einer offenen Position gehalten wird.

### STAND DER TECHNIK

In der faseroptischen Kommunikationstechnik werden seit langem optische Steckverbindersysteme eingesetzt, bei denen zwei optischen Fasern dadurch miteinander gekoppelt werden, dass zwei Steckverbinder, in denen jeweils eine der Fasern in einer Ferrule endet, von gegenüberliegenden Seiten in eine Kupplung bzw. einen Adapter so eingesteckt werden, dass die Ferrulen von beiden Seiten in eine in der Kupplung angeordnete Führungshülse ("sleeve") hineingleiten und mit den Stirnseiten aneinanderstossen. Derartige Steckverbindersysteme sind unter der Bezeichnung SC, LC, E2000, LSH oder LX.5 bekannt und auf dem Markt.

Bei einem Teil der bekannten Steckverbindersysteme sind die Steckverbinder mit verschwenkbaren Schutzdeckeln ausgerüstet, die im nicht eingesteckten Zustand des Steckverbinders die Öffnung, aus der die Ferrule mit dem Faserende herausragt, abdecken und so einerseits die empfindliche Einkoppelfläche der optischen Faser gegen Verschmutzung und Beschädigung schützen und andererseits verhindern, dass in der optischen Faser geführte Laserstrahlung nach aussen dringt und möglicherweise Personenschäden verursacht. Derartige mit schwenkbaren Schutzdeckeln versehene optische Steckverbinder sind z.B. in der EP-B1-0 570 652, der E-A1-0 823 649, der EP-A1-1 072 917, der US-A-5,883,995 oder der US-A-6,142,676 offenbart.

Grundsätzlich ist es möglich, die schwenkbaren Deckel an den Steckverbindern ohne Hilfe von Federelementen ausschliesslich durch das Zusammenwirken von am Deckel und in der Kupplung angeordneten Betätigungselementen zu betätigen bzw. auf- und zuzuschwenken. Solche federlosen Lösungen sind in der US-A-5,883,995 und in der EP-B1-0 570 652 beschrieben.

Um ein sicheres Verschliessen und Geschlossensein der Deckel zu gewährleisten, werden jedoch zunehmend an den Steckverbindern Federelemente eingesetzt, welche den Deckel in Schliessrichtung vorspannen und damit sowohl ein selbsttätiges Schliessen bewirken als auch dem Öffnen des Deckels einen Widerstand entgegensetzen und so die Gefahr des unbeabsichtigten Aufschwenkens deutlich verringern.

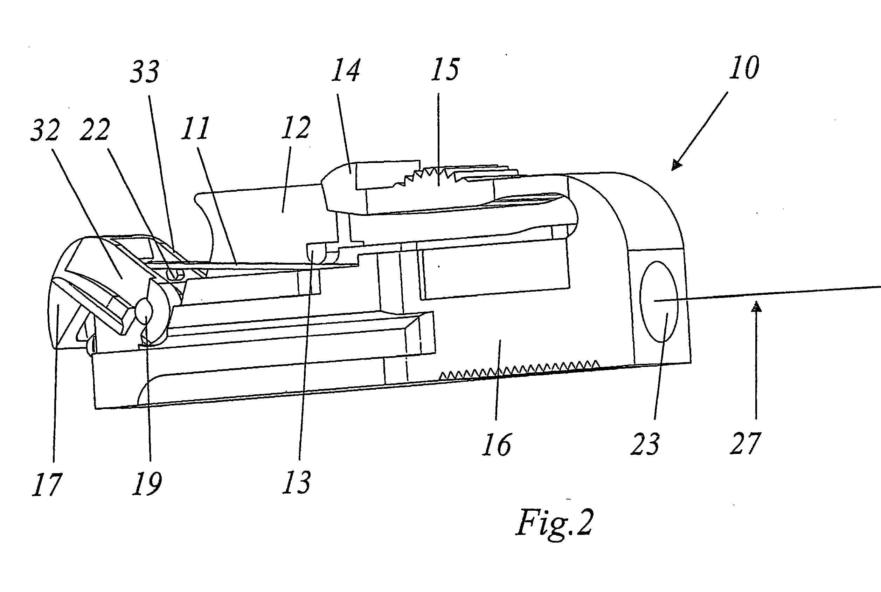

In der EP-A1-0 823 649 ist am Steckverbinder ein Deckel vorgesehen, der eine kombinierte Schwenk- und Schiebebewegung ausführt, wobei er beim Öffnen zu nächst aufschwenkt und dann in Richtung: der Steckverbinderachse linear nach hinten geschoben wird. Um den Deckel in Schliessrichtung vorzuspannen, ist in diesem Fall eine parallel zur Steckverbinderachse liegende Spiralfeder vorgesehen, die über einen Stössel (11 in Fig. 2) auf einen am Deckel angeformten Hebelarm (12 in Fig. 2) einwirkt. Eine vergleichbare Mechanik ist auch in der EP-A1-1 072 917 gezeigt. In beiden Fällen ist die geschlossene Position des Deckels die einzige stabile Position. In jeder anderen Position des Deckels wirkt der Druck der Feder stets in Richtung auf diese geschlossene Position.

Eine andere Situation ergibt sich bei der Lösung der eingangs genannten US-A-6,142,676 (Fig. 33 ff.). Hier ist zwar ebenfalls eine Spiralfeder zur Beaufschlagung des Deckels vorgesehen. Die Spiralfeder ist jedoch mit dem einen Ende am Deckel befestigt und sitzt mit dem anderen Ende auf einem schwenkbar gelagerten Stift. Gleichzeitig führt der Deckel eine reine Schwenkbewegung aus. Als Folge davon ergibt sich eine Art Schnappmechanismus, bei dem der Deckel wahlweise zwei stabile Positionen hinnehmen kann, nämlich die vollständig geöffnete Position und die vollständig geschlossene Position: Wird der Deckel aus der geschlossenen Position aufgeschwenkt, wird die Spiralfeder zunehmend zusammengedrückt, bis sie in einer vorbestimmten Zwischenposition des Deckels maximal zusammengedrückt ist. Schwenkt der Deckel über die vorbestimmte Zwischenposition hinaus, dehnt sich die Spiralfeder wieder aus. Als Folge davon wird der Deckel durch die Spiralfeder entweder in die geöffnete oder in die geschlossene Position gedrückt, je nachdem, auf welcher Seite der vorbestimmten Zwischenposition er sich gerade befindet. Das zusätzliche Vorspannen des Deckels in die geöffnete Position hat dabei insbesondere den Vorteil, dass der Deckel beim Herausziehen aus der Kupplung für die nachfolgende Schliessbewegung optimal positioniert ist.

Probleme ergeben sich beim Einsatz von Spiralfedern zum Vorspannen der Schutzdeckel in Schliessrichtung vor allem dadurch, dass die Spiralfedern bei der Montage schwierig zu handhaben sind und vor allem bei einer automatisierten Montage Probleme hervorrufen. Diese Probleme werden um so grösser, je kleiner die Steckverbinder werden. Dies gilt insbesondere für die sogenannten SFF(Small Form Factor)-Verbinder, wie sie beispielsweise in der eingangs genannten US-A-6,142,676 beschrieben sind.

### DARSTELLUNG DER ERFINDUNG

Es ist Aufgabe der Erfindung, einen optischen Steckverbinder zu schaffen, dessen schwenkbarer Schutzdeckel durch Federmittel in Schliessrichtung vorgespannt ist, und der sich selbst bei weiter verkleinerten Abmessungen ohne Schwierigkeiten und insbesondere auch automatisch montieren lässt.

Die Aufgabe wird durch die Gesamtheit der Merkmale des Anspruchs 1 gelöst.

Gemäss der Erfindung ist, die Blattfeder mit ihrem einen Ende im Deckel selbst fest angeordnet gleitet und beim Verschwenken des Deckels mit einem freien Ende an einer am Gehäuse ausgebildeten Gleitfläche entlang, derart, dass der Deckel in Schliessrichtung vorgespannt ist. Besonders vorteilhaft ist, dass erfindungsgemäss die Blattfeder am Deckel derart befestigt ist, dass sie bei geschlossenem Deckel eine aus der optischen Faser austretende Strahlung abfängt. Nach einer Weilgbildung der Erfindung ist vorgeschen, dass der bei geschlossenem Deckel im Strahlengang der optischen Faser liegende Teil der Blattfeder relativ zur optischen Achse der optischen Faser derart schräg gestellt ist, dass auf die Blattfeder auftreffende Strahlung aus der optischen Faser nicht in die optische Faser zurückrefleldiert wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Ansicht schräg von vorne gesehen einen nicht erfindungsgemässen, Steckverbinders der , bei dem sich der Deckel in der geschlossenen ersten Position befindet;
- Fig. 2: in einer perspektivischen Ansicht schrag von hinten gesehen den nicht erfindungsgemässen Steckverbinder aus Fig. 1 mit halb aufgeschwenktem Deckel bei maximaler Auslenkung der Blattfeder;
- Fig. 3: in einer zu Fig. 1 vergleichbaren Darstellung den nicht erfindungsgemäsen Steckverbinder aus Fig. 1 mil dem Deckel in der vollständig aufgeschwenkten, zweiten Position; und
- Fig. 4: in einer zu Fig. 1 vergleichbaren Darstellung eines erfindungsgemässen Steckverbinder , bei dem die Blattfeder im Deckel selbst angeordnet ist.

### WEGE ZUR AUSFÜHRUNG DER ERFINDUNG

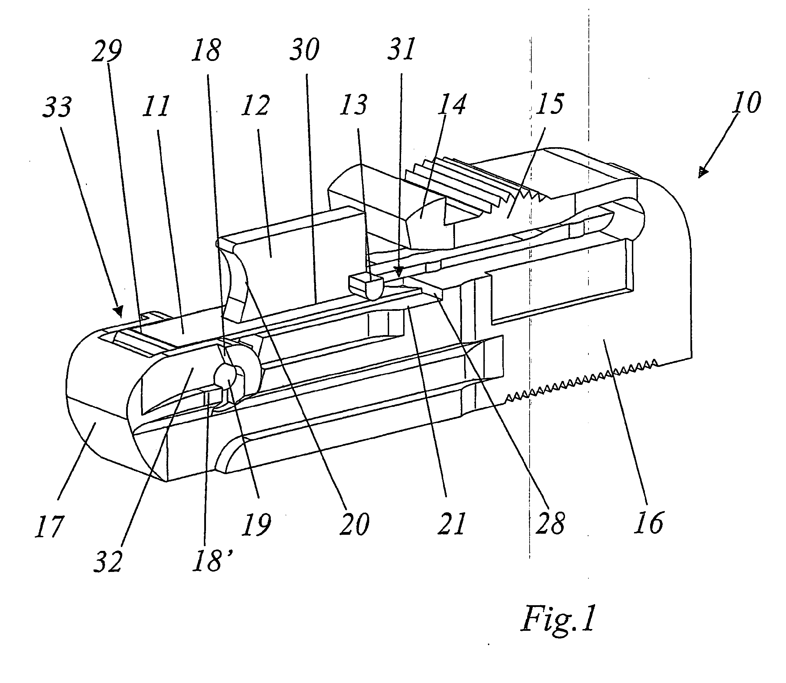

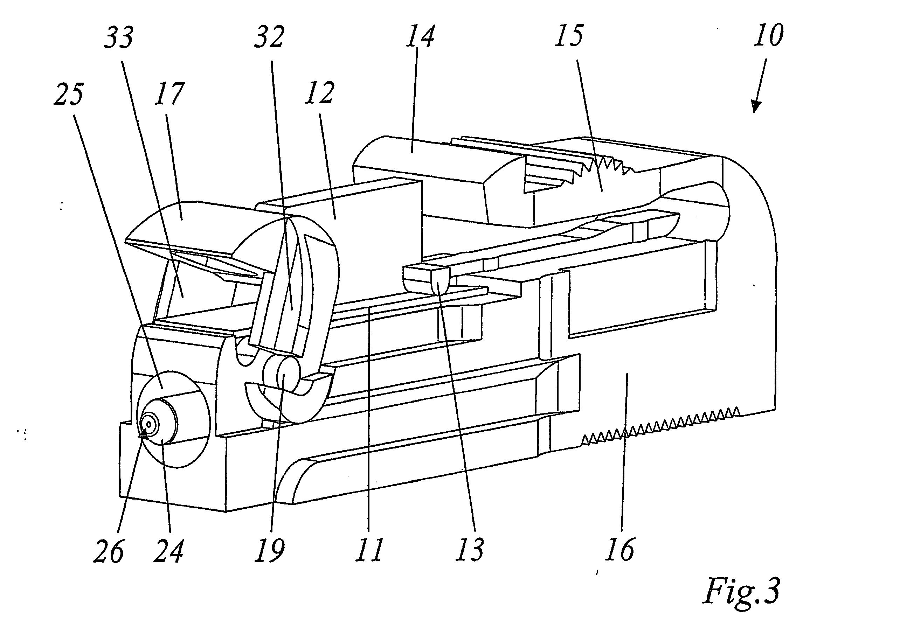

In den Fig. 1 bis 3 ist in einer perspektivischen Darstellung ein Steckverbinders 10 wiedergegeben, wobei der am Steckverbinder 10 vorgesehene Deckel 17 in den Figuren unterschiedliche Positionen einnimmt. Der Steckverbinder 10 hat ein Gehäuse 16 aus einem geeigneten Kunststoff, durch welches in Längsrichtung entlang einer Steckverbinderachse 27 (Fig. 2) eine Durchgangsbohrung verläuft, die am hinteren Ende des Steckverbinders 10 in einer ersten Öffnung 23 (Fig. 2) und am vorderen Ende in einer zweiten Öffnung 25 (Fig. 3) nach aussen tritt. In die hintere erste Öffnung 23 wird das Kabel mit der optischen Faser durch einen Knickschutz in den Steckverbinder 10 eingeführt. Aus der vorderen zweiten Öffnung 25 ragt aus dem Inneren des Steckverbinders 10 eine Ferrule 24 heraus, in deren zentraler Bohrung das Ende der optischen Faser 26 untergebracht ist (Fig. 3). Zu weiteren Einzelheiten des inneren Aufbaus sei auf die beispielhafte Konfiguration aus den Fig. 13 und 14 der eingangs genannten US-A-6, 142,676 verwiesen.

Am hinteren Ende des Steckverbinders 10 ist am Gehäuse 16 ein sich parallel zur Steckverbinderachse 27 nach vorn erstreckender Rastarm 15 angeformt, der sich elastisch gegen das Gehäuse 16 verbiegen lässt. Der Rastarm 15 trägt an seinem vorderen freien Ende einen Rasthaken, mit dem er hinter einer Rastkante in der zum Steckverbinder 10 gehörigen Kupplung einrastet, wenn der Steckverbinder in die Kupplung eingesteckt wird.

Am vorderen Ende des Steckverbinders 10 ist am Gehäuse 16 ein Deckel 17 mittels zweier Schwenkarme 32, 33 um eine Schwenkachse 19 verschwenkbar angeordnet. Im geschlossenen Zustand (Fig. 1) verschliesst der Deckel 17 die vordere zweite Öffnung 25 und schützt so die Endfläche der optischen Faser 26 vor Verschmutzung und Beschädigung. Zugleich wird verhindert, dass Laserlicht aus der optischen Faser 26 nach aussen dringen und das Auge eines Betrachters schädigen kann. Beim Einstecken des Steckverbinders 10 in die Kupplung wird durch ein Zusammenspiel zwischen verschiedenen Betätigungselementen am Deckel 17 und in der Kupplung in die vollständig von der in Fig. 1 dargestellten vollständig geschlossenen ersten Position in die in Fig. 3 dargestellte vollständig geöffnete zweite Position verschwenkt. Dies geschieht dadurch, dass ein seitlich in der Kupplung angebrachter Nocken gegen eine an den Schwenkarmen 32, 33 17 seitlich und oberhalb der Schwenkachse 19 ausgebildete erste Eingriffsfläche 18 drückt. Der ersten Eingriffsfläche 18, gegenüber liegt eine zweite Eingriffsfläche 18', mit welcher der Nocken der Kupplung in Eingriff kommt, wenn der Steckverbinder 10 wieder aus der Kupplung herausgezogen wird, und den Deckel 17 damit wieder in die Schliessposition zurückverschwenkt. In der vollständig geöffneten zweiten Position der Fig. 3 schlägt der Deckel 17 an einem Anschlag 12 an, der am Gehäuse 16 wie eine Rückenflosse angeformt ist und am vorderen Ende eine der Form des Deckel angepasste Anschlagfläche 20 (Fig. 1) aufweist. Beim Steckverbinder 10 sind nun Federmittel vorgesehen, die eine Blattfeder 11 einschliessen. Grundsätzlich ist es denkbar, die Blattfeder als integralen Bestandteil des Gehäuses 16 am Gehäuse 16 auszuformen. Hierdurch wäre der Montageaufwand auf ein Minimum beschränkt. In der Ausführungsform der Fig. 1 bis 3 ist die Blattfeder 11 als separate, aus einem Metallblech mit guten Federeigenschaften bestehende, ebene Feder ausgebildet, die am Gehäuse 16 des Steckverbinders 10 befestigt ist. Dazu ist am Gehäuse 16 eine parallel zur Steckverbinderachse 27 liegende, ebene Unterstützungsfläche 21 ausgebildet, auf der die Blattfeder 11 mit der Unterseite aufliegt. Oberhalb der Blattfeder 11 sind am Anschlag seitlich abstehende Niederhalter 13 angeformt, welche die Blattfeder 11 auf der Unterstützungsfläche 21 niederhalten. Die Niederhalter 13 erstrecken sich parallel zur Unterstützuhgsfläche 21 nach aussen und sind auf der Unterseite abgerundet, um einerseits die Montage und andererseits ein federndes Verbiegen der Blattfeder 11 zu erleichtern. Nach hinten zu ist die Unterstützungsfläche 21 durch einen ersten Absatz 28 begrenzt, der ein Verschieben der Blattfeder 11 nach hinten verhindert. Ein zweiter Absatz 29 im vorderen Bereich des Steckverbinders 10 verhindert eine Verschieben der Blattfeder 11 nach vom. Gegen eine seitliche Verschiebung ist die Blattfeder 11 durch den Anschlag 12 fixiert, der von einer entsprechenden schlitzartigen Ausnehmung 30 in der Blattfeder 11 aufgenommen wird. Die Ausnehmung 30 ist nach hinten zu offen und weist am offenen Ende eine trichterförmige Erweiterung 31 auf, so dass die Blattfeder 11 nach hinten zu die Gestalt einer zweizinkigen Gabel hat. Durch die Ausbildung der Blattfeder 11 selbst und die spezielle Art der Befestigung am Gehäuse 16 ist die Montage der Blattfeder 11 sehr einfach: Sie wird bei geschlossenem Deckel 17 mit der als Gabel ausgebildeten Seite den Anschlag 12 umgreifend auf der Unterstützungsfläche 21 gleitend nach hinten geschoben, wobei sie mit den beiden Zinken der Gabel unter die Niederhalter 13 fährt. Am Ende des Einschubvorgangs rastet die Blattfeder 11 zwischen den beiden Absätzen 28 und 29 ein.

Die Wechselwirkung der Blattfeder 11 mit dem verschwenkbaren Deckel 17 ist am besten in der Fig. 2 zu erkennen: Am Deckel 17 sind die beiden Schwenkarme 32, 33 angeformt, die das Gehäuse 16 seitlich umgreifen, und mittels derer der Deckel 17 an der Schwenkachse 19 schwenkbar gelagert ist. Die Blattfeder 11 kommt in einem freien Raum zwischen den Schwenkarmen 32, 33 zu liegen. Auf den Innenseiten der Schwenkarme 32, 33 sind nach innen stehend Noppen 22 angeformt, auf denen die Blattfeder 11 mit dem vorderen freien Ende aufliegt. Die Noppen 22 sind so positioniert, dass bei geschlossenem Deckel 17 (Fig. 1) und bei vollständig geöffnetem Deckel 17 (Fig. 3) die Blattfeder 11 mit ihrem freien Ende nahezu parallel zur Unterstützungsfläche 21 liegt und nur geringfügig ausgelenkt ist, um ein stabiles Verbleiben des Deckels 17 in den Extrempositionen zu gewährleisten. Beim Verschwenken des Deckels 17 zwischen diesen beiden Extrempositionen beschreiben die Noppen 22 eine Kreisbahn um die Schwenkachse 19, auf der sie das freie Ende der Blattfeder 11 elastisch auslenken bzw. anheben, bis gemäss Fig. 2 in einer vorbestimmten Zwischenposition, in welcher die Noppen 22 sich in etwa senkrecht über der Schwenkachse 19 befinden, die Maximalauslenkung der Blattfeder 11 erreicht ist. Vor dieser Zwischenposition spannt die Blattfeder 11 den Deckel 17 in Schliessrichtung vor; hinter der Zwischenposition drückt die Blattfeder 11 den Deckel in vollständig geöffnete Position der Fig. 3. Der Deckel 17 mit den angeformten Schwenkarmen 32, 33 kann aus einem Kunststoff hergestellt sein. Es ist aber auch denkbar, Deckel und Schwenkarme aus einem Metall auszubilden, um aus der optischen Faser 26 austretende Laserstrahlung auch bei höheren Intensitäten sicher abzuschirmen. Dabei ist es zweckmäßig, die Innenseite des Deckels 17 relativ zur optischen Achse der optischen Faser 26 schräg zu stellen, um eine Reflexion der Strahlung zurück in die Faser zu vermeiden.

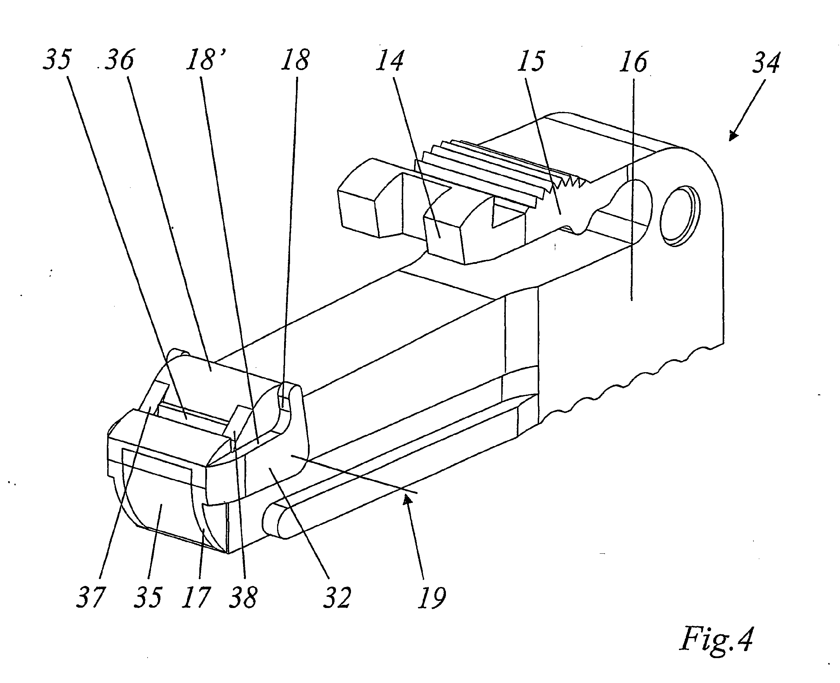

Ein optischer Steckverbinder nach der Erfindung ist in Fig. 4 wiedergegeben. Der Steckverbinder 34 hat ein zu dem Steckverbinder 10 aus Fig. 1 vergleichbare Gehäuse 16 mit einem vergleichbaren Rastarm 15 und Rasthaken 16 zum Verrasten in der Kupplung. Auch bei diesem Ausführungsbeispiel ist am vorderen Ende des Steckverbinders 34 ein um eine querliegende Schwenkachse 19 verschwenkbarer Deckel 17 angeordnet. Am Deckel 17 sind wiederum Schwenkarme angeformt, von denen nur der eine Schwenkarm 32 zu sehen ist. Die Eingriffsflächen 18 und 18' haben die bereits weiter oben im Zusammenhang mit Fig. 1 beschriebene Funktion. Die Vorspannung des Deckels in Schliessrichtung wird hier durch eine Blattfeder 35 übernommen, die am Deckel 17 selbst befestigt ist. Die Blattfeder 35 ist wie ein V gebogen. Mit dem einen Schenkel des V ist sie auf der Vorderseite des Deckels 17 in eine Ausnehmung eingeschoben und so gehalten. Der andere, freie Schenkel des V ragt zwischen dem Deckel 17 und der Stirnseite des Gehäuses 16 nach oben und übernimmt die Federfunktion. Er ist zur Seite hin durch zwei am Gehäuse 16 angeformte Begrenzungswände 37, 38 geführt.

Beim Aufschwenken des Deckel 17 aus der in Fig. 4 gezeigten geschlossenen Position wird die Blattfeder 35 mit verschwenkt. Der freie Schenkel der Blattfeder 35 gleitet an einer nach aussen gewölbten Gleitfläche 36 des Gehäuses 16 entlang. Diese Gleitfläche 36 ist in ihrer Krümmung nun so ausgelegt, dass die Federspannung der Blattfeder 35 beim Aufschwenken des Deckels 17 zunimmt. Entsprechend ergibt sich für den Deckel 17 eine Vorspannung in Schliessrichtung. Ist die Krümmung der Gleitfläche 36 darüber hinaus so ausgelegt, dass die Federspannung zum Ende des Aufschwenkvorgangs hin wieder abnimmt, ergibt sich wie bei dem Ausführungsbeispiel der Fig. 1 ein bistabiles Verhalten, d.h., der Deckel erreicht sowohl beim vollständigem Geschlossensein als auch bei vollständigem Geöffnetsein ein stabile Endlage mit einer entsprechenden Federvorspannung.

Der Vorteil der in Fig. 4 gezeigten Feder-Konfiguration ist vor allem für solche Steckverbinder augenfällig, bei denen aus dem Ende der optischen Faser Laserstrahlung mit relativ grosser Leistung austreten kann. Die (metallische) Blattfeder 35 befindet sich hier bei geschlossenem Deckel 17 direkt im Strahlengang der optischen Faser und blockiert wirksam das aus der optischen Faser austretende Licht. Wenn zusätzlich der bei geschlossenem Deckel 17 im Strahlengang der optischen Faser 26 liegende Teil der Blattfeder 35 relativ zur optischen Achse der optischen Faser 26 derart schräg gestellt ist, dass auf die Blattfeder 35 auftreffende Strahlung aus der optischen Faser nicht in die optische Faser zurückreflektiert wird, ergibt sich der weitere Vorteil, dass bei geschlossenem Deckel 17 reflexionsbedingte Störungen in einer an der optischen Faser angeschlossenen Schaltung sicher vermieden werden. Die Abschirmung der aus der optischen Faser austretenden Laserstrahlung kann noch weiter verbessert werden, wenn seitlich auf der Innenseite im Deckel 17 Metalleinlagen vorgesehen werden, welche die seitlich austretende Strahlung abfangen.

### BEZUGSZEICHENLISTE

- 10,34: Steckverbinder (optisch)
- 11,35: Blattfeder
- 12: Anschlag
- 13: Niederhalter
- 14: Rasthaken 15 Rastarm
- 16: Gehäuse (Steckverbinder)
- 17: Deckel
- 18,18': Eingriffsfläche
- 19: Schwenkachse
- 20: Anschlagfläche
- 21: Unterstützungsfläche (Blattfeder)
- 22: Noppe
- 23,25: Öffnung
- 24: Ferrule
- 26: optische Faser
- 27: Steckverbinderachse
- 28,29: Absatz
- 30: Ausnehmung (schlitzartig)
- 31: Erweiterung (trichterförmig)
- 32,33: Schwenkarm
- 36: Gleitfläche
- 37,38: Begrenzungswand (seitlich)

## Patentansprüche

1. Optischer Steckverbinder (10, 34) zum Verbinden von optischen Fasern (26), mit einem Gehäuse (16) und einem Deckel (17), welches Gehäuse (16) eine erste Öffnung (23) für ein optisches Kabel mit einer zu verbindenden optischen Faser (26) und eine zweite Öffnung (25) umfasst, durch welche die optische Faser (26) mit ihrem Ende aus dem Gehäuse (16) nach aussen treten kann, wobei die zweite Öffnung (25) durch den am Gehäuse (16) gelagerten Deckel (17) verschliessbar ist, welcher um eine Schwenkachse (19) zwischen einer ersten Position, in der er die zweite Öffnung (25) verschliesst, und einer zweiten Position, in der er die zweite Öffnung (25) freigibt, verschwenkbar ist, und wobei der Steckverbinder Federmittel (11) aufweist, welche den Deckel (17) in Schliessrichtung vorspannen, **dadurch gekennzeichnet,**
- **dass** die Federmittel eine metallische Blattfeder (35) umfassen, die mit ihrem einen Ende im Deckel (17) selbst fest angeordnet ist und beim Verschwenken des Deckels (17) mit einem freien Ende an einer am Gehäuse (16) ausgebildeten Gleitfläche entlanggleitet, derart, dass der Deckel (17) in Schliessrichtung vorgespannt ist und am Deckel (17) derart befestigt ist, dass sie bei geschlossenem Deckel (17) eine aus der optischen Faser (26) an der zweiten Öffnung (25) austretende Strahlung abfängt.

2. Steckverbinder nach Anspruch 1, **dadurch gekennzeichnet, dass** der bei geschlossenem Deckel (17) im Strahleingang der optischen Faser (26) liegende Teil der Blattfeder (35) relativ zur optischen Achse der optischen Faser (26) derart schräg gestellt ist, dass auf die Blattfeder (35) auftreffende Strahlung aus der optischen Faser (26) nicht in die optische Faser (26) zurückreflektiert wird.

3. Steckverbinder nach Anspruch 1 oder 2, **dadurch gekennzeichnet, dass** seitlich auf der Innenseite im Deckel (17) zum Abfangen seitlich austretender Strahlung Metalleinlagen vorgesehen sind.

## Claims

1. An optical connector (10, 34) for connecting optical fibers (26), with a housing (16) and a cover (17), which housing (16) comprises a first opening (23) for an optical cable with an optical fiber (26) to be connected, and a second opening (25), through which the optical fiber (26) protrudes outward from the housing (16) with its end, the second opening (25) being able to be closed by the cover (17), which can be pivoted between a first position, in which it closes the second opening (35), and a second position, in which it frees the second opening (25), and the connector comprises spring means (11), which prestress the cover (17) in the closing direction, **characterized in that** the spring means comprise a metallic leaf spring (35), which is fixedly arranged with its one end in the cover (17) itself and, during the pivoting of the cover (17), slides with a free end along on a sliding surface formed on the housing (16) in such a way that the cover (17) is prestressed in the closing direction and that the leaf spring (35) is fastened to the cover (17) in such a way that, when the cover (17) is closed, it intercepts radiation emerging from the optical fiber (26).

2. The connector as claimed in claim 1, **characterized in that** the part of the leaf spring (35) that lies in the path of rays of the optical fiber (26) when the cover (17) is closed is set obliquely in relation to the optical axis of the optical fiber (26) in such a way that radiation impinging on the leaf spring (35) from the optical fiber (26) is not reflected back into the optical fiber (26).

3. The connector as claimed in either of claim 1 or 2, **characterized in that** metal inserts for intercepting laterally emerging radiation are provided laterally on the inner side in the cover (17).

## Revendications

1. Connecteur optique (10, 34) pour la connexion de fibres optiques (26), comprenant un boîtier (16) et un couvercle (17), lequel boîtier (16) comprend une première ouverture (23) pour un câble optique avec une fibre optique (26) à connecter et une deuxième ouverture (25) à travers laquelle la fibre optique (26) peut sortir avec une extrémité hors du boîtier (16), la deuxième ouverture (25) pouvant être fermée par le couvercle (17) monté sur le boîtier (16), lequel peut être pivoté autour d'un axe de pivotement (19) entre une première position dans laquelle il ferme la deuxième ouverture (25) et une deuxième position dans laquelle il ouvre la deuxième ouverture (25), et le connecteur présentant des moyens de ressort (11) qui précontraignent le couvercle (17) dans la direction de fermeture, **caractérisé en ce que**
les moyens de ressort comprennent un ressort à lame métallique (35) qui est disposé fixement avec l'une de ses extrémités dans le couvercle (17) lui-même et qui, lors du pivotement du couvercle (17), glisse avec une extrémité libre contre une surface de glissement réalisée sur le boîtier (16) de telle sorte que le couvercle (17) soit précontraint dans la position de fermeture et est fixé sur le couvercle (17) de telle sorte qu'il reçoive, lorsque le couvercle (17) est fermé, un rayonnement issu de la fibre optique (26) au niveau de la deuxième ouverture (25).

2. Connecteur selon la revendication 1, **caractérisé en ce que**, lorsque le couvercle (17) est fermé, la partie du ressort à lame (35) située dans l'entrée du rayonnement de la fibre optique (26) est disposée de manière oblique par rapport à l'axe optique de la fibre optique (26) de telle sorte que le rayonnement tombant sur le ressort à lame (35) et issu de la fibre optique (26) ne soit pas réfléchi dans la fibre optique (26).

3. Connecteur selon la revendication 1 ou 2, **caractérisé en ce que** des inserts métalliques sont prévus latéralement sur le côté intérieur dans le couvercle (17) pour recevoir un rayonnement sortant latéralement.
